# EUROPÄISCHE PATENTSCHRIFT

(11) **EP 0 630 140 B1**
(45) Veröffentlichungstag und Bekanntmachung des Hinweises auf die Patenterteilung: **14.04.2004**
(21) Anmeldenummer: 93116920.5
(22) Anmeldetag: 20.10.1993
(51) Int. Cl.: H04M 1/72, H02J 7/00, H04M 19/08, H04M 1/725

(54) **Schnurloses Telefon**
Cordless telephone
Téléphone sans fil

(30) Priorität: 17.06.1993 DE 4320047
(43) Veröffentlichungstag der Anmeldung: 21.12.1994
(73) Patentinhaber: Deutsche Telekom AG, 53105 Bonn (DE)
(72) Erfinder: Tietz, Richard-Jürgen, Dipl.-Ing., D-53125 Bonn (DE); Simon, Werner, Dipl.-Ing., D-64289 Darmstadt (DE)
(74) Vertreter: Rudolph, Wolfgang

(56) Entgegenhaltungen:
- EP-A- 0 473 297
- WO-A-92/10047
- DE-A- 4 024 708
- DE-A- 4 216 509
- US-A- 5 200 991
- ELEKTRONIK, Bd. 40, Nr. 20, Oktober 1991 MÜNCHEN, Seiten 122-124, HEIGL 'DIE FAX-SCHNITTSTELLE IM MOBILFUNKBEREICH '
- FUNKSCHAU, Bd. 63, Nr. 18, August 1991 MÜNCHEN, Seiten 64-65, 'DIE TAE-DOSE FÜR DAS C-NETZ'
- PATENT ABSTRACTS OF JAPAN vol. 016 no. 344 (E-1239) ,24.Juli 1992 & JP-A-04 104646 (NATSUKUSU:KK)

## Beschreibung

Die Erfindung betrifft ein schnurloses Telefon nach dem Oberbegriff des Patentanspruchs 1. Derartige schnurlose Telefone sind, mit hochfrequenter Trägerwellenübertragung über Antennen auch für größere Distanzen, in einer Vielzahl von Veröffentlichungen und Firmenschriften bekannt (z.B. Siemens Sinus 3LX) und auch für optische Übertragungsstrecken (im Nahbereich ohne Wellenleiter), z.B. in der DE-OS 2534 658 beschrieben.

Derartige schnurlose Telefone, die allgemein aus einem fest an einer Schnittstelle zum Telefonnetz und an einer Stromversorgung installierten Festteil mit ständig übertragungsbereiten Mitteln der drahtlosen Verbindung und einem oder mehreren Mobilteilen bestehen, werden zunehmend verwendet, um dem Telefon-Benutzer mehr Bewegungsfreiheit ohne ihn behindernde lange Leitungen zu verschaffen.

Die Mobilteile enthalten neben einer ortsfesten Stromversorgung (Netzteil) bzw einer Primärbatterie oder einer meist am Festteil ladbaren Sekundärbatterie ebenfalls Mittel der drahtlosen Verbindung sowie der Steuertechnik, Wähl- und Sprachkommunikation. Bei Funkverbindung sind diese Mittel der drahtlosen Verbindung z.B. die Funktechnik einschließlich Frequenzmanagement und Sicherheitstechnik.

Es ist auch aus den gleichen Gründen der Ortsunabhängigkeit bekannt (DE-OS 4026 073) eine spezielle Schnittstelle zum kabellosen Koppeln zwischen Transceivern einer ortsfesten Datenverarbeitungsanlage und eines beweglichen Datenendgerätes, z.B. Terminal, mit ähnlichen Mitteln der drahtlosen Übertragung aufzubauen.

Die bekannten drahtlosen Verbindungen sind jeweils nur für speziell vorgesehene Anwendungen geeignet; z.B. schnurlose Telefone nur für den Telefondienst. Für den Betrieb andersartiger drahtloser Verbindungen für unterschiedliche Anwendungen in enger räumlicher Nachbarschaft sind besondere Vorkehrungen erforderlich, die sich sowohl auf den Herstellungsaufwand als auch auf die notwendigen Prüfungen für die Betriebszulassung solcher Einrichtungen nachteilig auswirken.

Aus ELEKTRONIK, Bd. 40, Nr. 20, Oktober 1991 München, Seiten 122-124, Heigl "Die Fax-Schnittstelle im Mobilfunkbereich" ist eine Schnittstelle beschrieben, die ausschließlich für den Mobilfunkbereich konzipiert ist. Es schafft'die Möglichkeit, ein Standard-Faxgerät mit einer analogen Zweidraht-Schnittstelle zu verbinden.

Außerdem ist durch die DE-A-40 24 708 eine Anordnung beschrieben, die drahtgebundenen Fernsprechgeräten den Zugang zu einem öffentlichen Telefonnetz auch dann ermöglicht, wenn eine Fernsprechamtsleitung zur Verfügung steht, aber der Teilnehmeranschluß sich im Empfangsbereich eines Funktelefonnetzes befindet. Dafür wird das Sende/Empfangsteil eines Funktelefons mit einem Interface verbunden, das die elektrische Schnittstelle einer Fernsprechamtsleitung realisiert. Zur Ankopplung an das Funktelefon wird die Schnittstelle Sende-/Empfangsteil-Bedieneroberfläche benutzt. Diese Lösung hat jedoch den Nachteil, daß die realisierte elektrische Schnittstelle einer Fernsprechamtsleitung auf einem Mobilfunkgerät aufbaut und infolgedessen nur jeweils eine Anwendung kennt. Sie zeigt keine Lösung für schnurlose Telefone und einen gewünschten Parallelbetrieb mehrerer solcher Geräte.

Weiterhin ist aus der US-A-5 200 991 ein Bildübertragungsgerät bekannt, in dem ein mobiles Telefon mit einer Facsimile-Einheit über einen Stecker verbunden ist. Dadurch ist es möglich, daß die Facsimile-Einheit keine Leitungsverbindung benötigt und bewegungsfrei wird.

Diese Lösung beinhaltet jedoch keine Lösung für schnurlose Telefone, die auf einer Telefonanschlußeinheit als mechanische Realisierung einer Schnittstelle aufbaut.

Die Erfindung hat sich zur Aufgabe gestellt, diese Nachteile durch eine universellere Nutzbarmachung eines schnurlosen Telefons zu vermeiden.

Diese Aufgabe wird erfindungsgemäß durch die kennzeichnenden Merkmale des Patentanspruchs 1 gelöst. Weitere Ausgestaltungen sind in den Patentansprüchen 2 bis 4 charakterisiert.

Unter netzinvers ist hierbei zu verstehen, daß die Schnittstelle mindestens in den folgenden Parametern invers den gültigen Zulassungsbedingungen des Telefonnetzes (Nachbildung des Netzes aus Sicht der anzuschaltenden Geräte) entspricht:
* Sende- und Empfangsbezugsdämpfung, Rauschen, Rückhörbezugsdämpfung sowie den davon abgeleiteten Parametern;
* Gleichstromverhalten, insbesondere Gleichstromwiderstand im Betrieb;
* Ruferkennung (Ansprech- und Nichtansprech-Bedingungen);
* Wahlverhalten (Wahlaufnahme-Möglichkeit - IWV/MFV -) mit den für das Telefonnetz bzw. in den CCITT/CEPT-Standards festgelegten Grenzwerten.

Vorteilhafte Ausgestaltungen und Weiterbildungen ergeben sich aus den Unteransprüchen.

Der Grundgedanke der Erfindung besteht darin, sowohl an einer für den speziellen Anwendungsfall gestalteten schnurlosen Anschalteeinrichtung für Endeinrichtungen die Anschaltemöglichkeit für alle Arten von Endeinrichtungen zu schaffen unter Substitution des drahtgebundenen Endstellen-Leitungsnetzes; als auch alternativ dazu in den Mobilteil eines schnurlosen Telefons, insbesondere zwischen den drahtlosen und den Telefonteil eine Anschaltemöglichkeit für Zusatzeinrichtungen einzufügen, (z.B. in Deutschland mittels TAE Steckdose). Durch eine solche Anschalte-Möglichkeit können nahezu alle üblichen Endeinrichtungen wie auch Zusatzeinrichtungen, wie Modem, Fax, Fernschaltund Fernwirkeinrichtungen usw. direkt bzw. mit geringfügigen Anpassungs-Änderungen drahtlos betrieben werden und auf die Installation und den Betrieb weiterer ähnlicher Anlagen kann verzichtet werden.

Die Erfindung ist nachstehend an einigen Ausführungsbeispielen näher erläutert. In den zugehörigen Zeichnungen zeigen:
- Fig. 1: ein Prinzipschema mit einem mehrfach genutzten Mobilteil und
- Fig. 2: ein Schema mit mehreren Mobilteilen.

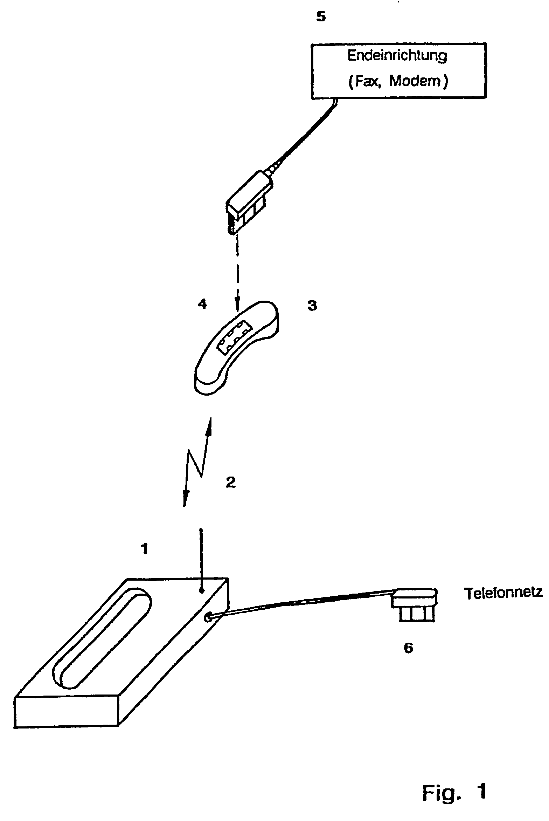

Die in der Fig. 1 dargestellte einfachste Variante zeigt ein an das Telefonnetz angeschlossenes Festteil 1 allgemein üblicher Art und eine drahtlose Verbindung 2 zu einem Mobilteil 3. Im Mobilteil 3 befindet sich die netz-inverse Schnittstelle 4, ausgeführt über eine TAE-Buchse, an die sich eine beliebige marktübliche Endeinrichtung 5, z.B. ein Fax oder Modem, anschließen läßt. Eine Ausführung der TAE-Buchse 4 mit Umschalter kann für einen alternativen Betrieb des Mobilteiles 3 sorgen.

Eine mögliche Ausführungsvariante besteht darin, daß die reine Funktechnik des Mobilteiles 3 anstatt mit der üblichen Fernsprechtechnik direkt mit einem Modem oder einer sonstigen Zusatzeinrichtung gekoppelt ist, so daß aus einem schnurlosen Telefon ein z.B. schnurloses Modem wird; Ausführung als separates Gerät, Modul, Steckkarte, Slotkarte usw., ggf. Nutzung des integrierten Modems.

Eine zweite Ausführungsvariante besteht darin, daß die reine Funktechnik des Festteils 1 anstatt mit dem Fernsprechnetz direkt mit der Anwendungstechnik, z.B. einem Computer verbunden ist (z.B. schnurloser Onlinebetrieb von Laptobs), oder mit einer einfachen Telefonendeinrichtung.

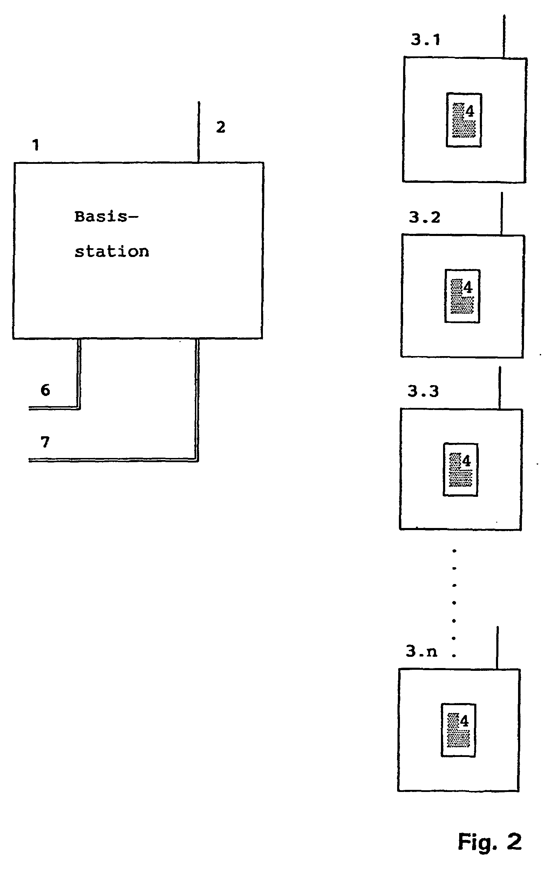

Mit der Fig. 2 sind einige mögliche Betriebsweisen mit einem Festteil 1 und mehreren Mobilteilen 3.1 ··· 3.n angedeutet. Das Festteil 1 ist eine Basisstation mit einer Telefonanschlußeinheit 6, einem Netzanschluß 7 und der drahtlosen Verbindung 2 zu den n Mobilteilen 3.1 ··· 3.n, von denen eine beliebige Anzahl 1 bis n mit einer zusätzlichen netz-inversen Schnittstelle 4 ergänzt sein kann.

Die Basisstation des Festteiles 1 kann weitere nicht dargestellte Verbindungen zu stationären Einrichtungen aufweisen, zu denen ein Verbindungsbedarf über eines der Mobilteile 3.1···3.n besteht. Sie kann wie ein Wechselschalter (Multi-Link) betrieben sein, wenn keine Verbindungen zwischen den Mobilteilen 3 erforderlich ist. Sie kann jedoch auch, als schnurlose Telekommunikations-Anlage betrieben, zur Verbindung zwischen mehreren Mobilteilen 3 dienen.

Als zusätzliche Maßnahmen beim Funkbetrieb mit mehreren Mobilteilen 3.1···3.n können Techniken zu Verbindungszeitbegrenzung (Time out) bzw. zum. "Parken" von Verbindungen eingesetzt werden, um die Belegungszeiten der Funkkanäle denen im Fernsprechbetrieb anzupassen bzw. um eine zeitgestaffelte Nutzung der Funkkanäle zu ermöglichen. Der Funkkanal wird ausgelöst (freigegeben für andere Benutzer) während die Fernsprechverbindung gehalten wird; ein Funkkanal wird erneut belegt, wenn ein z.B. am Mobilteil angeschlossener Computer ein Datenpaket sendet; Auslösung der Gesamtverbindung durch Time out oder Befehl.

Die schnurlose Anschalteeinrichtung kann so zur diensteunabhängigen Anschaltung von beliebigen drahtgebundenen Endeinrichtungen wie z.B. Telefone, Fax, Anrufbeantworter, Modem oder BTX benutzt werden.

## Patentansprüche

1. Schnurloses Telefon, bestehend aus einem an ein Telefonnetz angeschlossenes Festteil (1) mit Schnittstelle zum Telefonnetz und Mitteln der drahtlosen Verbindung (2) sowie aus mindestens einem mit diesem in drahtloser Verbindung (2) stehenden Mobilteil (3.1 ... 3n) mit Mitteln der drahtlosen Verbindung, der Steuertechnik, Wähl- und Sprachkommunikation, **dadurch gekennzeichnet,**
**daß** mindestens ein Mobilteil (3.1 ... 3n) mittels einer zusätzlichen netz-inversen Schnittstelle (4) zu einer schnurlosen Telefonanschlußeinheit (6) für den Anschluß beliebiger marktüblicher drahtgebundener Endeinrichtungen (5) ausgerüstet ist und
**daß** die netz-inverse Schnittstelle (4) derart ausgestaltet ist, daß sie durch Nachbildung des Netzes aus Sicht der anzuschaltenden Endeinrichtung (5) mindestens in den folgenden Parametern invers den gültigen Zulassungsbedingungen des Telefonnetzes in der Sende- und Empfangsbezugsdämpfung, im Rauschen, in der Rückhörbezugsdämpfung sowie den davon abgeleiteten Parametern, im Gleichstromverhalten, Gleichstromwiderstand im Betrieb, in der Ruferkennung, und im Wahlverhalten mit den für das Telefonnetz bzw. in den CCITT/CEPT-Standards festgelegten Grenzwerten entspricht.

2. Schnurloses Telefon nach Patentanspruch 1, **dadurch gekennzeichnet,**
**daß** mehrere mit netz-inversen Schnittstellen (4) ausgerüstete Mobilteile (3,1 ... 3n) miteinander oder mit dem Festteil (1) verbindbar sind.

3. Schnurloses Telefon nach Patentanspruch 1 oder 2, **dadurch gekennzeichnet,**
**daß** mindestens ein Mobilteil (3.1 ... 3n) direkt mit einem Modem oder einer sonstigen Zusatzeinrichtung gekoppelt ist, das als separates Gerät, Modul, Steckkarte oder Slotkarte zu einem schnurlosen Modem wird.

4. Schnurloses Telefon nach einem der Patentansprüche 1 oder 2, **dadurch gekennzeichnet,**
**daß** das Festteil (1) funktechnisch direkt mit Anwendungstechnik, einem Computer zum schnurlosen Onlinebetrieb oder mit einer Telefonendeinrichtung (5) verbunden ist.

## Claims

1. Cordless telephone, consisting of a fixed part (1) connected to a telephone network with interface to the telephone network and with means for wireless connection (2) as well as consisting of at least one mobile part (3.1 ... 3n) in wireless connection (2) therewith with means for wireless connection, control equipment, dialling and voice communication, **characterized in that**
at least one mobile part (3.1 ... 3n) is equipped by means of an additional network-inverse interface (4) to a cordless telephone line unit (6) for the connection of any market-customary wire-bound terminal devices (5) and
the network-inverse interface (4) is equipped in such a manner that, through reproduction of the network from the viewpoint of the terminal device (5) to be connected, it inversely satisfies, at least in the following parameters, the valid approval conditions of the telephone network with regard to send and receive reference equivalent, noise, sidetone reference equivalent as well as the therefrom derived parameters, with regard to direct-current behaviour, direct-current resistance in operation, call detection, and with regard to dialling behaviour with the limit values laid down for the telephone network and/or in the CCITT/CEPT standards.

2. Cordless telephone according to claim 1, **characterized in that**
a plurality of mobile parts (3.1 ... 3n) equipped with network-inverse interfaces (4) are connectable to each other or to the fixed part (1).

3. Cordless telephone according to claim 1 or 2, **characterized in that**
at least one mobile part (3.1 ... 3n) is connected directly to a modem or other additional device which, as a separate unit, module, plug-in card or slot card, becomes a cordless modem.

4. Cordless telephone according to any one of claim 1 or 2, **characterized in that**
the fixed part (1) is radio-connected directly to application equipment, a computer for cordless online operation or to a telephone terminal device (5).

## Revendications

1. Téléphone sans fil comportant une station fixe (1), reliée à un réseau téléphonique, avec une interface vers le réseau téléphonique et des moyens de connexion sans fil (2) ainsi qu'au moins une station mobile (3₁, ..., 3ₙ) connectée par radio (2) à cette station et avec des moyens de connexion sans fil, de commande, de communication commutée et de parole, **caractérisé en ce que**
du moins une station mobile (3₁, ..., 3ₙ) est équipée d'une interface supplémentaire inverse au réseau (4) vers une unité de raccordement téléphonique sans fil (6) pour permettre le raccordement de n'importe quels équipements terminaux par fil banalisés (5) et que
l'interface inverse au réseau (4) est équipée de façon à correspondre inversement, par équilibrage du réseau du point de vue de l'équipement terminal à raccorder (5) et du moins par rapport aux paramètres suivants, aux conditions d'agrément valables du réseau téléphonique en ce qui concerne l'affaiblissement de référence d'émission et de réception, le bruit, l'équivalent de référence de l'effet local ainsi que les paramètres y associés, le comportement de courant continu, la résistance en courant continu pendant l'exploitation, l'identification de la ligne appelante et le comportement de numérotation avec les valeurs limites définies pour le réseau téléphonique ou fixées par les normes du CCITT et de la CEPT.

2. Téléphone sans fil selon la revendication 1, **caractérisé en ce que**
plusieurs stations mobiles (3₁, ..., 3ₙ) équipées d'interfaces inverses au réseau (4) peuvent être reliées soit entre elles, soit à la station fixe (1).

3. Téléphone sans fil selon l'une des revendications 1 ou 2, **caractérisé en ce que**
du moins une station mobile (3₁, ..., 3ₙ) est raccordée à un modem ou à un autre appareil accessoire qui, en tant qu'appareil séparé, module, carte à enficher ou à introduire, devient un modem sans fil.

4. Téléphone sans fil selon l'une des revendications 1 ou 2, **caractérisé en ce que**
la station fixe (1) est reliée de façon radioélectrique à des équipements d'application, à un ordinateur pour l'exploitation en ligne sans fil ou à un équipement terminal téléphonique (5).
